# EUROPEAN PATENT SPECIFICATION

(11) **EP 2 614 992 B1**
(45) Date of publication and mention of the grant of the patent: **21.02.2018**
(21) Application number: 12194709.7
(22) Date of filing: 29.11.2012
(51) Int. Cl.: B60Q 1/30, B62J 6/04, F21S 8/10

(54) **Taillight structure of motorcycle**
Rücklichtstruktur eines Motorrads
Structure de feu arrière de motocyclette

(30) Priority: 16.01.2012 TW 101200943
(43) Date of publication of application: 17.07.2013
(73) Proprietor: Kwang Yang Motor Co., Ltd., Kaohsiung City 80794 (TW)
(72) Inventor: Wu, Ren-Jay, Cambridge, CB1 1AH (GB); Wu, Wen-Yung, Cambridge, CB1 1AH (GB)
(74) Representative: Horak, Michael

(56) References cited:
- EP-A1- 1 816 393
- EP-A1- 2 101 202
- EP-A1- 2 281 736
- JP-A- 2006 131 084
- US-A- 5 980 067
- US-A1- 2006 193 144
- US-A1- 2008 205 073

## Description

### (a) Technical Field of the Invention

The present invention generally relates to a taillight structure of motorcycle, and more particularly to a taillight structure of motorcycle that enhances the performance of the taillight.

### (b) Description of the Prior Art

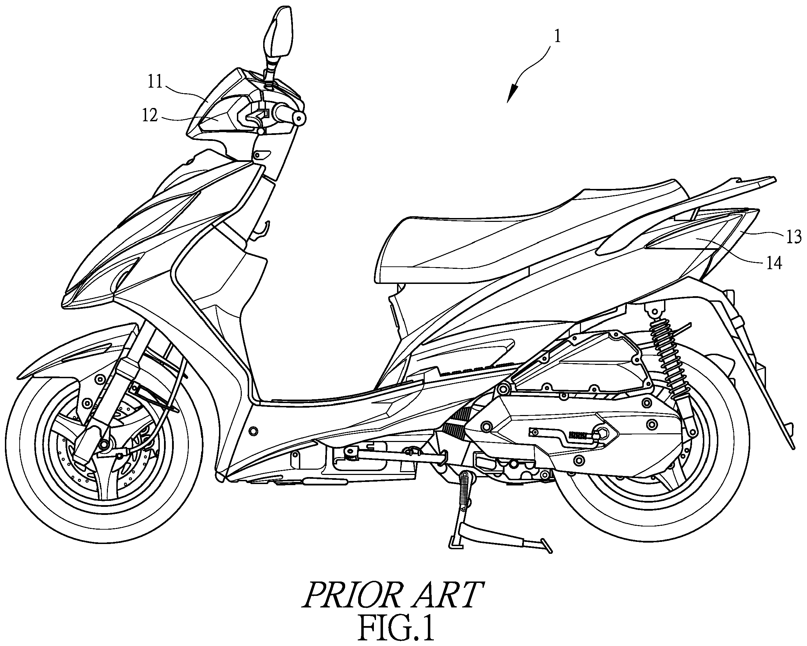

For safety and to meet traffic regulations, as shown in FIG 1, a motorcycle 1 is provided with various lights, including a headlight 11, front signal lights 12, a taillight 13, and rear signal lights 14. Taking the taillight 13 as an example, the purpose of the taillight is to remind drivers or riders at the back of the motorcycle.

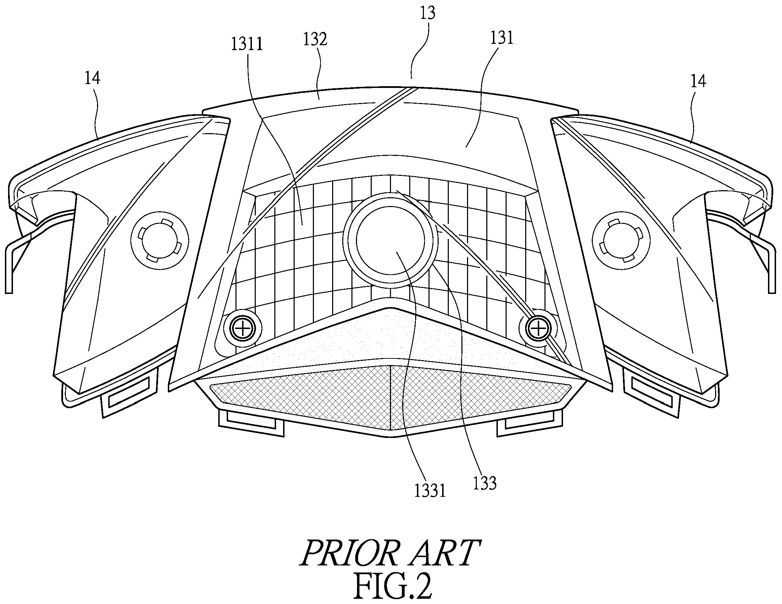

As shown in FIG 2, the taillight 13 generally comprises a base 131, a cover 132, and a light source unit 133. The base 131 has a surface opposing the cover 132 and coated with a reflective layer 1311 through electroplating. The light source unit 133 comprises a light source that is a light bulb 1331. The light source unit 133 is mounted to the base 131. The cover 132 is set to cover over the base 131 so as house the light source unit 133.

The light source unit 133 is controlled by a circuit control substrate (not shown) to give off light. When the light source unit 133 is set in operation to give off light, since the light source unit 133 comprises an illuminant that is a light bulb 1331, light emitting from the light source unit 133 is propagated to all directions in a radiating manner. The light that propagates in all directions in a radiating manner will be reflected back by the reflective layer 1311 of the base 131 so that a major portion of the light can be projected outward through the cover 132. As such, the taillight 13 may maintain a predetermined luminance for indicating the position of the motorcycle 1 and sending an alarm to the following vehicles.

Although the conventional taillight 13 as constructed in the way described above is effective in indicating the position of motorcycle 1 and providing an alarm to the following vehicles. However, as noted previously, the illuminant of the light source unit 133 of the taillight 13 is a light bulb 1331 and the light emitting from the light bulb 1331 propagates in all directions in a radiating manner, a shortcoming is that the luminance is sufficient for a vehicle located exactly behind the motorcycle 1. This makes the taillight 13 losing the functions of indicating the position of the motorcycle 1 and providing an alarm to the following vehicles. It is thus an issue to be overcome by the industry to effectively handle the shortcoming that a taillight 13 using a light bulb 1331 as an illuminant may have insufficient luminance at the rear side thereof so that it is no longer possible to effectively indicating the position of the motorcycle 1 and providing alarms to the following vehicles. US 5980067, which is considered as the closest prior art, discloses an indicator light for a motor vehicle having a faceted reflector, which comprises a single light source of a lamp and a screen in front of the lamp and catadoptric element formed on the screen. However, no additional lighting, such as an LED used in combination of a light guide, is included in the indicator light to help improving legibility of position and effectiveness of alarming and thus improving overall performance of the indicator light.

### SUMMARY OF THE INVENTION

In view of the problem that a motorcycle taillight using a light bulb as an illuminant may have insufficient luminance for the rear side of the motorcycle so as not be possible to effectively indicating the position of the motorcycle and providing alarms to the following vehicles.

The primary object of the present invention is to provide a taillight structure of motorcycle. The taillight at least comprises a base, a light condenser, a light source unit, and a cover. The base comprises at least two installation sections, wherein the installation sections of the base comprise a first installation section and a second installation section and the first installation section and the second installation section have surfaces forming reflective layers through electroplating or coating; the first installation section receives a light guide mounted therein and the second installation section receives the light source unit and the light condenser mounted therein; the light guide comprises a seat, a light guide strip, and two LED light sources in which the light guide strip is fit to the seat, the seat having two ends to which the LED light sources are respectively mounted, whereby light emitting from the LED light sources transmits through two ends of the light guide strip into the light guide strip so as to brighten the light guide strip and make the light guide illuminating. The light condenser comprises light condensation sections and the light condensation sections comprise condensation beads received therein. The light condenser is arranged between the light source unit and the cover. The cover is a light-transmitting member and the cover covers a front end of the base. The light condenser functions to converge a portion of the light that emits from the light source unit in a radiating manner and to project the light in an almost straightforward manner through and out of the cover so that the taillight forms bright spots at the light condenser, making the light at the light condenser brighter than other portions. As such, the legibility of the position of the taillight can be improved and effectiveness of alarming of the taillight is enhanced. In this way, the performance of the taillight is improved.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a schematic view showing the arrangement of motorcycle light.
FIG 2 is a schematic view showing a conventional taillight.
FIG 3 is an exploded view of a taillight according to the present invention.
FIG 4 is a rear view of the taillight according to the present invention.
FIG 5 is a schematic view showing a light condenser of the taillight according to the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

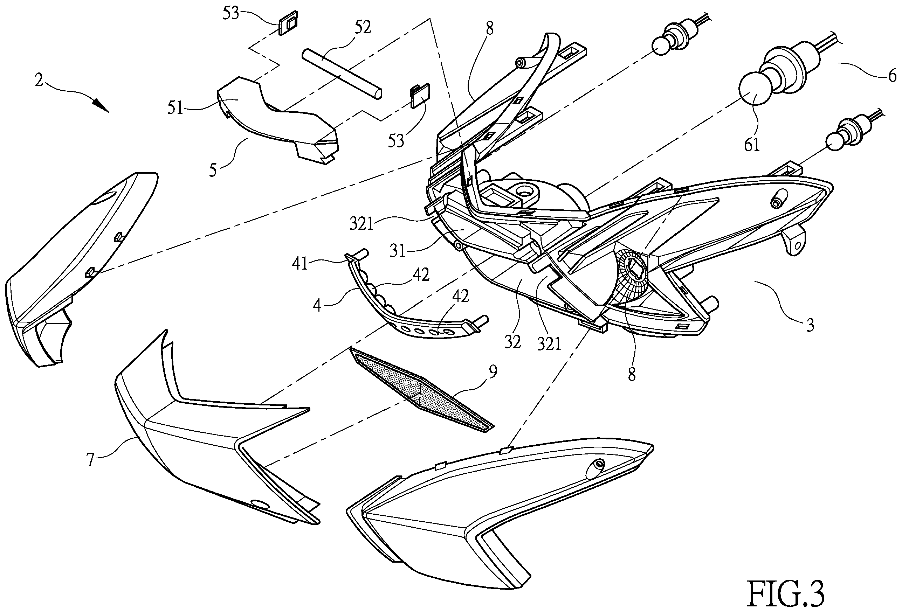

Referring to FIGS. 3, 4, and 5, the present invention provides a taillight structure of motorcycle. The taillight 2 comprises a base 3, a light condenser 4, a light guide 5, a light source unit 6 and a cover 7.

The base 3 forms a first installation section 31 and a second installation section 32. The first installation section 31 receives a light guide 5 fixed therein. The second installation section 32 receives a light source unit 6 and a light condenser 4 mounted therein. The second installation section 32 forms a pair of insertion notches 321. The insertion notches 321 receive the light condenser 4 to fit thereto. The first installation section 31 and the second installation section 32 have surfaces opposing the cover 7 and forming a reflective layer through electroplating or coating. The arrangement of the reflective layer helps reflect light inside the base 3 in a direction toward the cover 7.

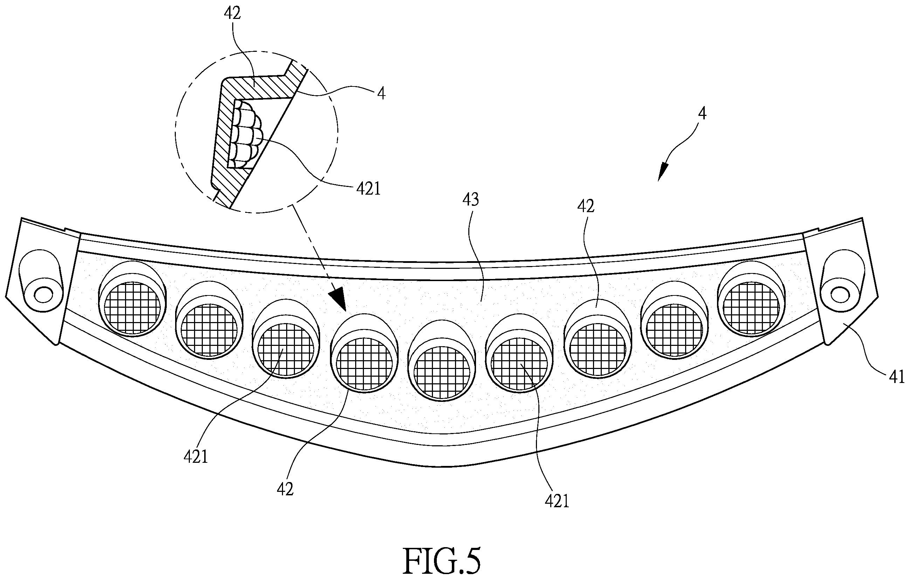

The light condenser 4 is specifically illustrated in FIG 5. The light condenser 4 has two opposite ends each forming a mounting section 41. The mounting sections 41 are insertable into and retained by the insertion notches 321 of the second installation section 32 of the base 3 in order to fix the light condenser 4 to the second installation section 32 of the base 3. The light condenser 4 comprises a plurality of light condensation sections 42 and the light condensation sections 42 form therein a plurality of condensation beads 421. The light condensation sections 42 function to condense the light emitting from the light source unit 6 with the condensation beads 421 for projecting the light in a direction toward the cover 7. The light condenser 4 comprises a translucent light interception section 43 surrounding the light condensation sections 42. The arrangement of the light interception section 43 makes the brightness of the light condensation sections 42 prominent.

The light guide 5 is mounted to the first installation section 31 of the base 3. The light guide 5 comprises a seat 51, a light guide strip 52, and two LED light sources 53. The light guide strip 52 is fit in the seat 51 and the seat 51 has two ends to which the LED light sources 53 are respectively mounted. Light emitting from the LED light sources 53 transmits through two ends of the light guide strip 52 into the light guide strip 52 so as to brighten the light guide strip 52 thereby making the light guide 5 illuminating.

The light source unit 6 is mounted to the second installation section 32 of the base 3. The light condenser 4 is arranged between the light source unit 6 and the cover 7. The light source unit 6 comprises an illuminant that is a light bulb 61. The light bulb 61 comprises position filaments and brake filament for alarming purposes. The light source unit 6 is electrically connected by electrical cable to the circuit control substrate to effect control of the operation thereof.

The cover 7 is a light-transmitting member. The cover 7 is set to cover a front end of the base 3 to effect water sealing for the taillight 2. The cover 7 is connected to the base 3 by means of adhesives or fusion.

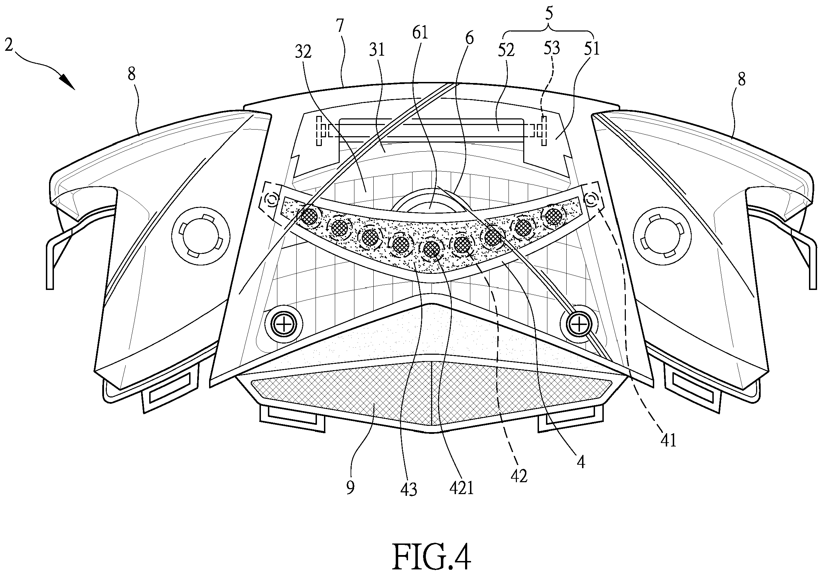

Further referring to FIGS. 3 and 4, in an example way of implementing the taillight structure of motorcycle according to the present invention, the taillight 2 is integrally formed with rear signal lights 8 arranged at two ends thereof. Further, an alarm reflector 9 is mounted under the taillight 2. In the implementation of the taillight structure of motorcycle according to the present invention, when a rider turns on the light bulb 61 of the light source unit 6 of the taillight 2, the light guide 5 is simultaneously lit. Under this condition, the taillight 2 has lights from at least the light bulb 61 of the light source unit 6 and the light guide 5. Since the light condenser 4 is arranged between the light source unit 6 and the cover 7, the light condensation sections 42 of the light condenser 4 may condense a portion of the light that emits from the light source unit 6 in a radiating manner and project outward the light straight and directly through the cover 7. As such, the light of the taillight 2 forms bright spots at the light condenser 4, which make light at the light condenser 4 brighter than other portions. Specifically, the taillight 2 features straight projection of light of the LED light at the site of the light condenser 4. Thus, with the arrangement of the light condenser 4 and the light guide 5 in the taillight 2, legibility of the position of the taillight 2 can be improved and effectiveness of alarming of the taillight 2 is enhanced.

The efficacy of the present invention is that the taillight 2 comprises a light condenser 4 and uses the light condenser 4 to converge a portion of the light that emits from the light source unit 6 in a radiating manner and to project the light in an almost straightforward manner through and out of the cover 7 so that the taillight 2 forms bright spots at the light condenser 4, making the light at the light condenser 4 brighter than other portions. As such, the legibility of the position of the taillight 2 can be improved and effectiveness of alarming of the taillight 2 is enhanced. Further, the taillight 2 comprises a first installation section 31 in which a light guide 5 is mounted, so that lighting effected with the light guide 5 may help improving legibility of position and effectiveness of alarming of the taillight 2 thereby improving the performance of the taillight 2.

It will be understood that each of the elements described above, or two or more together may also find a useful application in other types of methods differing from the type described above.

## Claims

1. A taillight structure for a motorcycle, comprising a taillight (2) that comprises at least a base (3), a light condenser (4), a light source unit (6), and a cover (7);
the base (3) comprising at least two installation sections (31, 32);
the light condenser (4) comprising light condensation sections (42), the light condensation sections (42) comprising condensation beads (421) received therein;
the cover (7) being a light-transmitting member, the cover (7) covering a front end of the base (3);
**characterized in that** the installation sections (31, 32) of the base (3) comprise a first installation section (31) and a second installation section (32), the first installation section (31) and the second installation section (32) having surfaces forming reflective layers through electroplating or coating, the first installation section (31) receiving a light guide (5) mounted therein, the second installation section (32) receiving the light source unit (6) and the light condenser (4) mounted therein in such a way that the light condenser (4) is arranged between the light source unit (6) and the cover (7), the light guide (5) comprising a seat (51), a light guide strip (52), and two LED light sources (53), the light guide strip (52) being fit to the seat (51), the seat (51) having two ends to which the LED light sources (53) are respectively mounted, whereby light emitting from the LED light sources (53) transmits through two ends of the light guide strip (52) into the light guide strip (52) so as to brighten the light guide strip (52) and make the light guide (5) illuminating.

2. The taillight structure for a motorcycle according to claim 1,
wherein the second installation section (32) forms a pair of insertion notches (321), the insertion notches (321) receiving the light condenser (4) to fit thereto.

3. The taillight structure for a motorcycle according to claim 1,
wherein the light condenser (4) forms mounting sections (41), the light condenser (4) being mounted in the second installation section (32) of the base (3) by means of the mounting sections (41).

4. The taillight structure for a motorcycle according to claim 1,
wherein the light condenser (4) comprises a translucent light interception section (43) surrounding the light condensation sections (42), whereby the arrangement of the light interception section (43) makes the brightness of the light condensation sections (42) prominent.

5. The taillight structure for a motorcycle according to claim 1,
wherein the light source unit (6) comprises an illuminant that comprises a light bulb (61), the light bulb (61) comprising position filaments and brake filaments for alarming purposes.

6. The taillight structure for a motorcycle according to claim 1,
wherein the cover (7) is connected to the base (3) by means of adhesives or fusion.

7. The taillight structure for a motorcycle according to any one of claims 1-6, wherein the taillight (2) comprises rear signal lights (8) integrally formed at two ends thereof and an alarm reflector (9) mounted under the taillight (2).

## Patentansprüche

1. Rücklichtstruktur für ein Motorrad, mit einem Rücklicht (2), das mindestens eine Basis (3), einen Lichtkondensator (4), eine Lichtquelleneinheit (6) und eine Abdeckung (7) umfasst;
wobei die Basis (3) mindestens zwei Installationsabschnitte (31, 32) umfasst;
wobei der Lichtkondensator (4) Lichtkondensations-Abschnitte (42) umfasst, die Kondensations-Verstärkungsrippen (421) umfassen, die darin aufgenommen sind; wobei die Abdeckung (7) ein Licht übertragendes Element ist und ein Vorderende der Basis (3) abdeckt;
**gekennzeichnet dadurch, dass** die Installationsabschnitte (31, 32) der Basis (3) einen ersten Installationsabschnitt (31) und einen zweiten Installationsabschnitt (32) umfassen, wobei der erste Installationsabschnitt (31) und der zweite Installationsabschnitt (32) Oberflächen haben, die reflektierende Schichten bilden, durch Galvanisieren oder Überzug, wobei der erste Installationsabschnitt (31) einen Lichtleiter (5) aufnimmt, der darin montiert ist, und der zweite Installationsabschnitt (32) die Lichtquelleneinheit (6) und den Lichtkondensator (4) aufnimmt, wobei letzterer darin derart montiert ist, dass der Lichtkondensator (4) zwischen der Lichtquelleneinheit (6) und der Abdeckung (7) angebracht ist, wobei der Lichtleiter (5) einen Sitz (51), einen Lichtleitstab (52) und zwei LED-Lichtquellen (53) umfasst, wobei der Lichtleitstab (52) in den Sitz (51) eingepasst ist, wobei der Sitz (51) zwei Enden aufweist, an die die LED-Lichtquellen (53) jeweils montiert sind, wodurch Licht, das von den LED-Lichtquellen (53) ausgestrahlt wird, durch zwei Enden des Lichtleitstabs (52) in den Lichtleitstab (52) übertragen wird, um den Lichtleitstab (52) aufzuhellen und den Lichtleiter (5) leuchten zu lassen.

2. Rücklichtstruktur für Motorrad nach Anspruch 1, wobei der zweite Installationsabschnitt (32) ein Paar Einsatzkerben (321) bildet, die den Lichtkondensator (4) aufnehmen, um dazu zu passen.

3. Rücklichtstruktur für Motorrad nach Anspruch 1, wobei der Lichtkondensator (4) Montageabschnitte (41) bildet und in dem zweiten Installationsabschnitt (32) der Basis (3) mittels der Montageabschnitte (41) montiert ist.

4. Rücklichtstruktur für ein Motorrad nach Anspruch 1, wobei der Lichtkondensator (4) einen durchscheinenden Lichtabfangabschnitt (43) umfasst, der die Lichtkondensations-Abschnitte (42) umgibt, wodurch die Anordnung der Lichtabfangabschnitt (43) die Helligkeit der Lichtkondensations-Abschnitte (42) hervorhebt.

5. Rücklichtstruktur für Motorrad nach Anspruch 1, wobei die Lichtquelleneinheit (6) einen Leuchtkörper umfasst, der eine Glühbirne (61) umfasst, wobei die Glühbirne (61) Positionsglühfäden und Bremsglühfäden für Warnzwecke umfasst.

6. Rücklichtstruktur für Motorrad nach Anspruch 1, wobei die Abdeckung (7) mit der Basis (3) durch Klebstoffe oder Verschmelzung verbunden ist.

7. Rücklichtstruktur für Motorrad nach einem beliebigen der Ansprüche 1-6, wobei das Rücklicht (2) rückwärtige Signallichter (8) umfasst, die mit zwei Enden davon verbunden sind, und einen Alarmreflektor (9), der unter das Rücklicht (2) montiert ist.

## Revendications

1. Structure de feu arrière de motocyclette, qui comprend un feu arrière (2) qui comprend au moins une base (3), un condensateur de lumière (4), une unité de source lumineuse (6), et un couvercle (7) ;
où la base (3) comprend au moins deux sections d'installation (31, 32) ;
où le condensateur de lumière (4) comprend des sections de condensation de lumière (42), où les sections de condensation de lumière (42) comprennent des perles de condensation (421) reçues dedans ;
où le couvercle (7) est un membre de transmission de lumière, où le couvercle (7) couvre une extrémité frontale de la base (3) ;
**caractérisée en ce que** les sections d'installation (31, 32) de la base (3) comprennent une première section d'installation (31) et une deuxième section d'installation (32), où la première section d'installation (31) et la deuxième section d'installation (32) ont des surfaces qui forment des couches réfléchissantes par galvanoplastie ou revêtement, où la première section d'installation (31) reçoit un guide de lumière (5) monté dedans, où la deuxième section d'installation (32) reçoit l'unité de source lumineuse (6) et le condensateur de lumière (4) montés dedans de façon que le condensateur de lumière (4) est disposé entre l'unité de source lumineuse (6) et le couvercle (7), où le guide de lumière (5) comprend un logement (51), une bande de guide de lumière (52), et deux sources lumineuses LED (53), où la bande de guide de lumière (52) est adaptée au logement (51), où le logement (51) a les deux extrémités sur lesquelles les sources lumineuses LED (53) sont respectivement montées, de manière que la lumière transmise par les sources lumineuses LED (53) est transmise à travers deux extrémités de la bande de guide de lumière (52) à la bande de guide de lumière (52) afin d'éclaircir la bande de guide de lumière (52) et faire illuminer le guide (5) de lumière.

2. Structure de feu arrière de motocyclette selon la revendication 1, où la deuxième section d'installation (32) forme une paire d'encoches d'insertion (321), où les encoches d'insertion (321) reçoivent le condensateur de lumière (4) pour s'y adapter.

3. Structure de feu arrière de motocyclette selon la revendication 1, où le condensateur de lumière (4) forme des sections d'installation (41), où le condensateur de lumière (4) est monté dans la deuxième section d'installation (32) de la base (3) moyennant des sections d'installation (41).

4. Structure de feu arrière de motocyclette selon la revendication 1, où le condensateur de lumière (4) comprend une section d'interception de lumière translucide (43) entourant les sections de condensation de lumière (42), de manière que l'agencement des section d'interception de lumière (43) fait la luminosité des sections de condensation de lumière (42) proéminente.

5. Structure de feu arrière de motocyclette selon la revendication 1, où l'unité de source lumineuse (6) comprend un illuminant qui comprend une ampoule (61), où l'ampoule (61) comprend des filaments de position et des filaments de frein pour fins d'alarme.

6. Structure de feu arrière de motocyclette selon la revendication 1, où le couvercle (7) est connecté à la base (3) moyennant des adhésifs ou par fusion.

7. Structure de feu arrière de motocyclette selon l'une quelconque des revendications 1-6, où le feu arrière (2) comprend des lumières de signal postérieures (8) formées intégralement dans deux extrémités de celui-ci et un réflecteur d'alarme (9) monté sous le feu arrière (2).
